# FASCICULE DE BREVET EUROPEEN

(11) **EP 0 708 744 B1**
(45) Date de publication et mention de la délivrance du brevet: **07.07.1999**
(21) Numéro de dépôt: 95918042.3
(22) Date de dépôt: 21.04.1995
(51) Int. Cl.: C03C 17/36

(54) **PROCEDE DE DEPOT D'UN REVETEMENT CONDUCTEUR SUR UN SUBSTRAT DE VERRE**
VERFAHREN ZUR ABLAGERUNG EINER LEITENDEN BESCHICHTUNG AUF EINEM GLASSUBSTRAT
METHOD OF DEPOSITING A CONDUCTING COATING ON A GLASS SUBSTRATE

(30) Priorité: 26.04.1994 FR 9405002
(43) Date de publication de la demande: 01.05.1996
(73) Titulaire: THOMSON TUBES ELECTRONIQUES, 78140 Vélizy (FR)
(72) Inventeur: BARET, Guy, F-92402 Courbevoie Cédex (FR)
(74) Mandataire: Guérin, Michel
(86) Numéro de dépôt international: FR9500527
(87) Numéro de publication internationale: WO9529136

(56) Documents cités:
- EP-A- 0 104 870
- EP-A- 0 226 993
- DE-A- 3 710 189
- US-A- 5 139 856
- DATABASE WPI Section Ch, Week 8305 Derwent Publications Ltd., London, GB; Class G, AN 83-10496k & JP,A,57 205 341 (SUWA SEIKOSHA KK) , 16 Décembre 1982
- H.K.PULKER 'Coatings on Glass' 1984 , ELSEVIER , AMSTERDAM voir page 94, alinéa 6.2 - page 96, alinéa 6.2.1.2

## Description

La présente invention est relative à un procédé de dépôt d'un revêtement conducteur sur un substrat de verre notamment pour écrans plats de visualisation.

Dans le domaine des écrans plats de visualisation, ce revêtement conducteur sert à former, après gravure, des réseaux d'électrodes. Ce revêtement conducteur a une épaisseur de l'ordre de un à quelques micromètres. Cette épaisseur est choisie en fonction du courant qui va traverser l'électrode.

Le dépôt conducteur doit former un interface d'aspect uniforme avec le substrat de verre, ne pas présenter de défauts (de trous par exemple), avoir un conductivité électrique suffisante, avoir une stabilité chimique satisfaisante pour permettre une connection viable dans le temps des électrodes ainsi formées, supporter une température d'environ 580° C (température de cuisson des couches diélectriques) sans subir de dégradation et surtout présenter une bonne adhérence avec le substrat de verre.

Tous les procédés utilisés actuellement consistent à réaliser un ou plusieurs dépôts conducteurs sous vide, par pulvérisation ou vaporisation. Le matériau déposé est généralement de l'aluminium, du nickel, du chrome qui donnent un éclat métallique tel un miroir au travers du verre. La couche déposée est relativement épaisse (de un à quelques micromètres) et la durée du dépôt en chambre à vide est relativement longue. Le coût de tels substrats est élevé et ce coût augmente très rapidement avec la surface à recouvrir.

Dans l'industrie du bâtiment, on utilise des vitres revêtues d'un matériau réfléchissant. On emploie un grand choix de métaux, d'alliages, d'oxydes métalliques, de nitrures pour avoir de nombreuses couleurs. L'épaisseur du dépôt est de l'ordre de quelques dizaines de nanomètres. Ce revêtement est réalisé dans des installations sous vide à des cadences de plusieurs dizaines de milliers de mètres carrés par jour. Ces procédés sont bon marchés. Mais les installations de production ne sont pas adaptées, vue leur grande taille et les faibles épaisseurs déposées, à la production de dalles révêtues pour écrans plats de visualisation.

Dans le domaine de la miroiterie, la métallisation se fait par argenture ou cuivrage chimique directement sur la glace . Cette technique ne permet pas d'obtenir ni une bonne adhérence, ni une couche suffisamment stable chimiquement.

II est également connu de réaliser des pistes conductrices sur du verre en déposant une pâte d'un composé organo-métallique, par sérigraphie par exemple, puis à procéder à une cuisson du substrat à une température supérieure à 400°C. L'épaisseur de la couche conductrice ne peut dépasser quelques dixièmes de micromètres et son adhérence est souvent médiocre. De plus, le dépôt par sérigraphie ne conduit pas à l'obtention d'une résolution suffisante des électrodes. Actuellement l'or donne des résultats acceptables mais sa couleur se voit à travers le verre et le cout est élevé.

Le brevet allemand DE-A-37 10 189 décrit un substrat de verre recouvert d'une couche d'un oxyde métallique sur laquelle une première couche de cuivre est déposée, puis une seconde plus épaisse obtenue par galvanisation.

La présente invention propose un procédé de dépôt d'un revêtement conducteur sur un substrat de verre qui ne présente pas les inconvénients précités. Ce revêtement a une très bonne adhérence sur le verre et une épaisseur comprise entre un et quelques micromètres. Le coût de substrats ainsi revêtus est beaucoup plus faible que ceux de l'art connu.

La présente invention propose de déposer au dessus du substrat de verre une première couche conductrice, puis au dessus de la première couche conductrice une seconde couche conductrice plus épaisse par une méthode de rechargement dans un milieu liquide et avant le dépôt de la première couche conductrice de prévoir le dépôt d'une couche d'accrochage directement sur le substrat de verre, cette couche d'accrochage étant en silicate de lithium.

Cette couche peut être déposée par une méthode de dépôt en couche épaisse.

La couche d'accrochage améliore considérablement l'adhérence du revêtement conducteur sur le substrat de verre et permet d'obtenir une bonne reproductibilité de l'adhérence sur le verre.

La première couche conductrice peut être déposée par une méthode de dépôt sous vide ou bien par une méthode de dépôt en couche épaisse.

En se passant d'installation de dépôt sous vide, le coût de fabrication est diminué et la fabrication est plus simple d'utilisation ce qui permet des capacités de production plus élevées.

Il est également possible de prévoir une couche assurant la compatibilité entre la première couche et la seconde couche.

Il peut aussi être intéressant de déposer un catalyseur juste avant le dépôt de la seconde couche. La seconde couche peut être aussi être protégée par une couche de protection.

Le rapport entre l'épaisseur de la seconde couche et l'épaisseur de la première couche est au moins de cent, l'épaisseur de la seconde couche étant comprise entre un et cinq micromètres environ.

D'autres caractéristiques et avantages du procédé selon l'invention apparaitront à la lecture de la description qui suit illustrée par les figures annexées qui représentent:
- la figure 1, en coupe, un substrat de verre revêtu obtenu par le procédé selon l'invention;
- les figures 2a,2b, en coupe, un substrat de verre revêtu obtenu par deux variantes du procédé selon l'invention;
- les figures 3a,3b en coupe, un substrat de verre revêtu obtenu par deux autres variantes du procédé selon l'invention.

Sur ces figures les échelles ne sont pas respectées pour une meilleure clarté.

On part d'un substrat 10 de verre qui est par exemple de type sodo-calcique (connu dans la littérature sous la dénomination anglo-saxonne de float glass). Ce substrat peut être éventuellement recuit, poli ou façonné. D'autres verres plats peuvent bien sûr être utilisés par exemple de type borosilicate ou aluminosilicate.

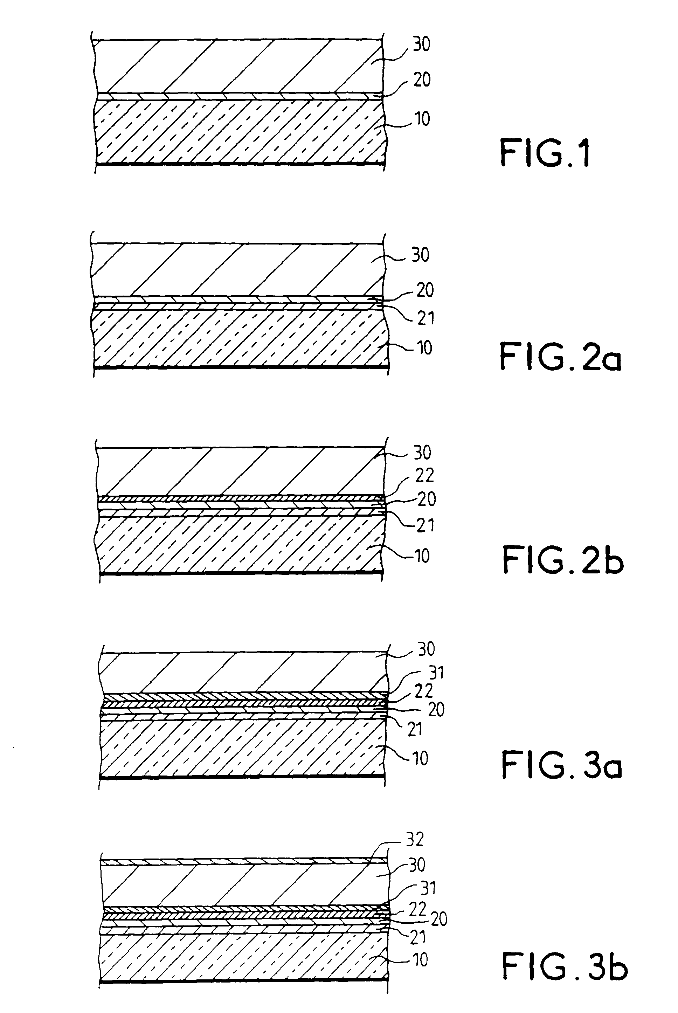

On se réfère à la figure 1. On commence par déposer sous vide sur ce substrat 10 de verre une première couche 20 conductrice. Cette première couche a typiquement une épaisseur comprise entre un et cinquante nanomètres. Cette première couche 20 conductrice est déposée par une technique habituelle de dépôt sous vide utilisée dans l'industrie verrière, telle que la pulvérisation, l'évaporation, le dépôt CVD. Cette première couche 20 peut être réalisée à base de métal, par exemple, d'aluminium, de nickel, de chrome, de cuivre, ou bien à base d'alliage, par exemple, d'acier inoxydable, ou encore à base d'oxyde métallique, par exemple, d'oxyde d'étain, d'oxyde d'étain et d'indium, ou même à base de nitrure, par exemple, de nitrure de titane. La seconde étape consiste à recouvrir la première couche 20 d'une seconde couche 30 plus épaisse, d'un matériau conducteur, par une technique de rechargement par immersion dans un milieu liquide. Cette technique peut être chimique, par exemple, par réaction autocatalytique ou par déplacement ou bien électrochimique telle que l'électrolyse. L'épaisseur de la seconde couche 30 déposée en phase liquide est comprise entre un et cinq micromètres environ. La seconde couche 30 peut être réalisée à base de métal tel que le cuivre, le nickel ou d'alliage et son matériau est choisi pour sa conductivité électrique.

Si l'adhérence de la première couche 20 sur le verre se revèle insuffisante pendant les étapes ultérieures, on peut envisager d'intercaler une couche d'accrochage 21 entre la première couche 20 et le substrat 10 de verre. C'est notamment le cas lorsque la première couche 20 est en acier inoxydable. Avantageusement, la couche d'accrochage 21 sera réalisée à base d' un ou plusieurs oxydes métalliques, par exemple, de titane, de zirconium, d'étain. L'oxyde de titane convient bien si la première couche est en acier inoxydable. Cette couche d'accrochage 21 déposée sous vide directement sur le substrat 10 de verre aura de préférence une épaisseur comprise entre un et dix nanomètres environ. Cette variante est illustrée sur la figure 2a.

Dans le cas des substrats pour panneaux de visualisation, on choisira de préférence pour le matériau de la première couche 20 un matériau qui donne un reflet métallique. Une couche d'aluminium donne un aspect de miroir, une couche de chrome donne un aspect de miroir plus sombre. Il est possible de prévoir un filtre polarisant sur la face avant de l'écran pour annuler les réflexions spéculaires. Une couche de nitrure de titane forme un filtre gris qui diminue le coefficient de réflexion lumineuse de la seconde couche 30.

Il est avantageux d'intercaler entre la première couche 20 et la seconde 30 couche une couche de compatibilité 22. Cette couche de compatibilité 22 est déposée sous vide après le dépôt de la première couche 20. Son épaisseur est comprise entre un et cent nanomètres environ. Elle prépare la première couche 20 au dépôt de la seconde effectué par immersion dans un milieu liquide. Cette couche est réalisée à base de métal, tel que le cuivre, le nickel, l'or, ou d'alliage. Le choix de son matériau se fait en fonction de la solution liquide utilisée pour le dépot de la seconde couche 30.

Dans le cas d'une première couche 20 en acier inoxydable et d'une seconde couche 30 en cuivre, une couche de compatibilité 22 en cuivre donne de bons résultats. Cette variante est représentée à la figure 2b.

Dans le cas où l'on dépose deux ou trois couches sous vide, ces couches sont déposées successivement, par pulvérisation par exemple, avec des cathodes différentes, dans le même vide pour diminuer les coûts et le temps de réalisation.

Il peut être intéressant de déposer une couche de catalyseur 31 juste avant le dépôt de la seconde couche 30 . Ce catalyseur peut être par exemple du palladium. Il activera le dépôt de la seconde couche 30. On peut l'utiliser par exemple lorsque la seconde couche 30 est déposée sur du nickel ou de l'acier inoxydable. La couche de catalyseur 31 est réalisée par trempé dans une solution liquide. Cette variante est représentée à la figure 3a. On a dessiné la couche de compatibilité 22, mais la couche de catalyseur peut être déposée directement sur la première couche 20 si l'on ne prévoit pas de couche de compatibilité 22.

On peut être amené à recouvrir la seconde 30 par une couche de protection 32 qui sert soit à protéger de la corrosion le matériau de la seconde couche 30, soit à faciliter le traitement ultérieur de gravure des électrodes. Cette couche de protection 32 peut être réalisée en métal tel que l'or ou le nickel résistant bien à la corrosion. L'épaisseur de cette couche de protection 32 peut être comprise entre cinquante et cinq cents nanomètres environ. Cette variante est représentée à la figure 3b. Le dépôt de la couche de protection 32 se fait aussi par une méthode de rechargement chimique ou électrochimique par immersion dans une solution liquide .

La couche d'accrochage 21 en silicate de lithium selon l'invention forme un revêtement rugueux très adhérent sur le verre. Cette couche d'accrochage 21 peut être déposée par une méthode connue de dépôt en couche épaisse telle que la sérigraphie, le dépôt au rideau, au pistolet, au rouleau etc... La couche d'accrochage aura une épaisseur de l'ordre d'un ou plusieurs micromètres. Ensuite on dépose la première couche conductrice 20 par pulvérisation, évaporation etc.. sous vide et la seconde couche conductrice 30 par une méthode de rechargement par immersion dans un milieu liquide comme décrit précédemment. La première couche conductrice 20 sera de préférence en acier inoxydable, en nickel ou en chrome et la seconde couche conductrice 30 de préférence en cuivre. On peut bien sûr prévoir de déposer également au moins une des couches suivantes : couche de compatibilité 22, couche de catalyseur 31, couche de protection 32 comme décrit ci-dessus.

Au lieu de déposer la première couche conductrice 20 par une méthode de dépôt sous vide, il est envisageable que cette première couche conductrice 21 soit également déposée par une méthode de dépôt en couche épaisse telle que la sérigraphie, le dépôt au rideau, au rouleau, au pistolet Dans cette variante, on peut déposer une pâte métallique tel que le cuivre, l'argent, l'or etc... ou une pâte d'un composé organométallique à base d'or essentiellement, par exemple.

La deuxième couche conductrice 30 est ensuite déposée par une technique de rechargement par immersion dans un milieu liquide comme décrit précédemment.

La première couche conductrice 20 aura de préférence une épaisseur d'une ou plusieurs centaines de nanomètres, typiquement environ 100 nanomètres, et la seconde couche conductrice 30 une épaisseur d'un ou plusieurs micromètres typiquement entre un et cinq micromètres.

Dans cette variante on peut prévoir de déposer également au moins une des couches suivantes : couche de compatibilité 22, couche de catalyseur 31, couche de protection 32 comme décrit ci-dessus.

## Revendications

1. Procédé de dépôt d'un revêtement électriquement conducteur sur un substrat (10) de verre comportant une étape consistant à déposer une première couche conductrice (20) au dessus du substrat (10) et une étape consistant à déposer une seconde couche conductrice (30) au dessus de la première couche conductrice (20) par une méthode de rechargement par immersion dans un milieu liquide, la seconde couche (30) étant plus épaisse que la première couche (20), l'étape consistant à déposer la première couche conductrice (20) étant précédée par une étape consistant à déposer directement sur le substrat (10) de verre une couche d'accrochage (21), caractérisé en ce que la couche d'accrochage (21) est en silicate de lithium.

2. Procédé de dépôt selon la revendication 1, caractérisé en ce la couche d'accrochage (21) est déposée par une méthode de dépôt en couche épaisse.

3. Procédé de dépôt selon l'une des revendications 1 ou 2, caractérisé en ce que la couche d'accrochage (21) a une épaisseur de l'ordre d'un ou plusieurs micromètres environ.

4. Procédé de dépôt selon l'une des revendications 1 à 3, caractérisé en ce que la première couche conductrice (20) est déposée par une méthode de dépôt sous vide.

5. Procédé de dépôt selon l'une des revendications 1 à 4, caractérisé en ce que l'épaisseur de la première couche conductrice (20) est comprise entre un et cinquante nanomètres environ.

6. Procédé de dépôt selon l'une des revendications 1 à 5, caractérisé en ce que le matériau de la première couche (20) est choisi parmi un métal, un alliage, un oxyde métallique, un nitrure.

7. Procédé de dépôt selon l'une des revendications 1 à 6, caractérisé en ce que la première couche conductrice (20) est déposée par une méthode de dépôt en couche épaisse.

8. Procédé de dépôt selon la revendication 7, caractérisé en ce que la première couche conductrice (20) a une épaisseur de l'ordre de la centaine de nanomètres.

9. Procédé de dépôt selon l'une des revendications 7 ou 8, caractérisé en ce que la première couche conductrice (20) est réalisée à partir d'une pâte métallique ou organo-métallique.

10. Procédé de dépôt selon l'une des revendications 1 à 9, caractérisé en ce qu'il comporte une étape consistant à déposer par une méthode de dépôt sous vide, entre la première couche (20) et la seconde couche (30), une couche (22) qui assure la compatibilité entre la première et la seconde couches (20,30).

11. Procédé de dépôt selon l'une des revendications 1 à 10, caractérisé en ce qu'il comporte une étape consistant à déposer une couche d'un catalyseur (31), cette étape précédant celle du dépôt de la seconde couche conductrice (30).

12. Procédé de dépôt selon la revendication 11, caractérisé en ce que la couche de catalyseur (31) est obtenue par trempé dans un milieu liquide.

13. Procédé de dépôt selon l'une des revendications 1 à 12, caractérisé en ce qu'il comporte une étape consistant à recouvrir la seconde couche conductrice (30) d'une couche de protection (32).

14. Procédé de dépôt selon la revendication 13, caractérisé en ce que la couche de protection (32) est obtenue par une méthode de rechargement par immersion dans un milieu liquide.

15. Procédé de dépôt selon l'une des revendications 1 à 14, caractérisé en ce que la seconde couche conductrice (30) a une épaisseur comprise entre un et cinq micromètres environ.

16. Procédé de dépôt selon l'une des revendications 1 à 15, caractérisé en ce que la seconde couche conductrice (30) est réalisée à base de métal, tel que le cuivre, le nickel, ou d'alliage.

17. Procédé de dépôt selon l'une des revendications 10 à 16, caractérisé en ce que la couche assurant la comptabilité (22) est réalisée à base de métal, tel que le cuivre, le nickel, l'or, ou d'alliage.

18. Procédé de dépôt selon l'une des revendications 10 à 17, caractérisé en ce que la couche assurant la comptabilité (22) a une épaisseur comprise entre un et cent nanomètres environ.

19. Procédé de dépôt selon l'une des revendications 11 à 18, caractérisé en ce que le catalyseur est réalisé à base de palladium.

20. Procédé de dépôt selon l'une des revendications 13 à 19, caractérisé en ce que la couche de protection (32) a une épaisseur comprise entre cinquante et cinq cents nanomètres environ.

21. Procédé de dépôt selon l'une des revendications 13 à 20, caractérisé en ce que la couche de protection (32) est réalisée à base de métal tel que l'or, le nickel.

22. Procédé de dépôt selon l'une des revendications 1 à 21, caractérisé en ce que le dépôt de la seconde couche (30) est un dépôt chimique.

23. Procédé de dépôt selon l'une des revendications 1 à 21, caractérisé en ce que le dépôt de la seconde couche (30) est un dépôt électrolytique.

24. Procédé de dépôt selon l'une des revendications 1 à 23 caractérisé en ce que le substrat (10) de verre est destiné à la réalisation d'écran plat de visualisation.

## Patentansprüche

1. Verfahren zur Ablagerung einer elektrisch leitfähigen Beschichtung auf einem Glassubstrat (10), bei dem auf dem Substrat (10) eine erste leitfähige Schicht (20) abgelagert wird und auf der ersten leitfähigen Schicht (20) mit einem Tauchbad-Auftragsverfahren in einem flüssigen Medium eine zweite leitfähige Schicht (30) abgelagert wird, wobei die zweite Schicht (30) dicker ist als die erste Schicht (20) und dem Ablagern der ersten leitfähigen Schicht (20) das Ablagern einer Haftschicht (21) direkt auf dem Glassubstrat (10) vorangeht, dadurch gekennzeichnet, daß die Haftschicht (21) aus Lithiumsilikat besteht.

2. Verfahren zur Ablagerung nach Anspruch 1, dadurch gekennzeichnet, daß die Haftschicht (21) mit einem Dickschicht-Ablagerungsverfahren abgelagert wird.

3. Verfahren zur Ablagerung nach einem der Ansprüche 1 oder 2, dadurch gekennzeichnet, daß die Haftschicht (21) eine Dicke in der Größenordnung von ungefähr einem Mikrometer oder mehreren Mikrometern hat.

4. Verfahren zur Ablagerung nach einem der Ansprüche 1 bis 3, dadurch gekennzeichnet, daß die erste leitfähige Schicht (20) mit einem Vakuum-Ablagerungsverfahren abgelagert wird.

5. Verfahren zur Ablagerung nach einem der Ansprüche 1 bis 4, dadurch gekennzeichnet, daß die Dicke der ersten leitfähigen Schicht (20) zwischen ungefähr einem Nanometer und fünfzig Nanometern liegt.

6. Verfahren zur Ablagerung nach einem der Ansprüche 1 bis 5, dadurch gekennzeichnet, daß das Material der ersten Schicht (20) aus einem Metall, einer Legierung, einem Metalloxid oder einem Nitrid besteht.

7. Verfahren zur Ablagerung nach einem der Ansprüche 1 bis 6, dadurch gekennzeichnet, daß die erste leitfähige Schicht (20) mit einem Dickschicht-Ablagerungsverfahren abgelagert ist.

8. Verfahren zur Ablagerung nach Anspruch 7, dadurch gekennzeichnet, daß die erste leitfähige Schicht (20) eine Dicke in der Größenordnung von etwa hundert Nanometern hat.

9. Verfahren zur Ablagerung nach einem der Ansprüche 7 oder 8, dadurch gekennzeichnet, daß die erste leitfähige Schicht (20) ausgehend von einer metallischen oder organometallischen Paste verwirklicht ist.

10. Verfahren zur Ablagerung nach einem der Ansprüche 1 bis 9, dadurch gekennzeichnet, daß es das Ablagern einer Schicht (22) mit einem Vakuum-Ablagerungsverfahren zwischen der ersten Schicht (20) und der zweiten Schicht (30) umfaßt, die die Verträglichkeit zwischen der ersten und der zweiten Schicht (20, 30) sicherstellt.

11. Verfahren zur Ablagerung nach einem der Ansprüche 1 bis 10, dadurch gekennzeichnet, daß es das Ablagern einer Katalysatorschicht (31) umfaßt, wobei dieses Ablagern dem Ablagern der zweiten leitfähigen Schicht (30) vorangeht.

12. Verfahren zur Ablagerung nach Anspruch 11, dadurch gekennzeichnet, daß die Katalysatorschicht (31) im Tauchverfahren in einem flüssigen Medium gebildet ist.

13. Verfahren zur Ablagerung nach einem der Ansprüche 1 bis 12, dadurch gekennzeichnet, daß es das Bedecken der zweiten leitfähigen Schicht (30) mit einer Schutzschicht (32) umfaßt.

14. Verfahren zur Ablagerung nach Anspruch 13, dadurch gekennzeichnet, daß die Schutzschicht (32) mit einem Tauchbad-Auftragsverfahren in einem flüssigen Medium gebildet ist.

15. Verfahren zur Ablagerung nach einem der Ansprüche 1 bis 14, dadurch gekennzeichnet, daß die zweite leitfähige Schicht (30) eine Dicke hat, die ungefähr zwischen einem Mikrometer und fünf Mikrometern liegt.

16. Verfahren zur Ablagerung nach einem der Ansprüche 1 bis 15, dadurch gekennzeichnet, daß die zweite leitfähige Schicht (30) auf Metallbasis, wie beispielsweise Kupfer, Nickel, oder auf Legierungsbasis verwirklicht ist.

17. Verfahren zur Ablagerung nach einem der Ansprüche 10 bis 16, dadurch gekennzeichnet, daß die Schicht (22) zum Sicherstellen der Verträglichkeit auf Metallbasis, wie beispielsweise Kupfer, Nickel, Gold, oder auf Legierungsbasis verwirklicht ist.

18. Verfahren zur Ablagerung nach einem der Ansprüche 10 bis 17, dadurch gekennzeichnet, daß die Schicht (22) zum Sicherstellen der Verträglichkeit eine Dicke hat, die ungefähr zwischen einem Nanometer und hundert Nanometern liegt.

19. Verfahren zur Ablagerung nach einem der Ansprüche 11 bis 18, dadurch gekennzeichnet, daß der Katalysator auf Palladiumbasis verwirklicht ist.

20. Verfahren zur Ablagerung nach einem der Ansprüche 13 bis 19, dadurch gekennzeichnet, daß die Schutzschicht (32) eine Dicke hat, die ungefähr zwischen fünfzig und fünfhundert Nanometern liegt.

21. Verfahren zur Ablagerung nach einem der Ansprüche 13 bis 20, dadurch gekennzeichnet, daß die Schutzschicht (32) auf Metallbasis, wie beispielsweise Gold, Nickel, verwirklicht ist.

22. Verfahren zur Ablagerung nach einem der Ansprüche 1 bis 21, dadurch gekennzeichnet, daß die Ablagerung der zweiten Schicht (30) eine chemische Ablagerung ist.

23. Verfahren zur Ablagerung nach einem der Ansprüche 1 bis 21, dadurch gekennzeichnet, daß die Ablagerung der zweiten Schicht (30) eine elektrolytische Ablagerung ist.

24. Verfahren zur Ablagerung nach einem der Ansprüche 1 bis 23, dadurch gekennzeichnet, daß das Glassubstrat (10) zur Verwirklichung eines flachen Bildschirms vorgesehen ist.

## Claims

1. Process for depositing an electrically conductive coating on a glass substrate (10), which includes a step consisting in depositing a first conductive layer (20) on top of the substrate (10) and a step consisting in depositing a second conductive layer (30) on top of the first conductive layer (20) using an overlaying method by immersion in a liquid medium, the second layer (30) being thicker than the first layer (20), the step consisting in depositing the first conductive layer (20) being preceded by a step consisting in depositing a bonding layer (21) directly on the substrate (10), characterized in that the bonding layer (21) is made of lithium silicate.

2. Deposition process according to Claim 1, characterized in that the bonding layer (21) is deposited using a thick-film deposition method.

3. Deposition process according to either of Claims 1 and 2, characterized in that the bonding layer (21) has a thickness of the order of one or more micrometres approximately.

4. Deposition process according to one of Claims 1 to 3, characterized in that the first conductive layer (20) is deposited using a vacuum deposition method.

5. Deposition process according to one of Claims 1 to 4, characterized in that the thickness of the first conductive layer (20) is between one and fifty nanometres approximately.

6. Deposition process according to one of Claims 1 to 5, characterized in that the material of the first layer (20) is chosen from a metal, an alloy, a metal oxide and a nitride.

7. Deposition process according to one of Claims 1 to 6, characterized in that the first conductive layer (20) is deposited by a thick-film deposition method.

8. Deposition process according to Claim 7, characterized in that the first conductive layer (20) has a thickness of the order of about one hundred nanometres.

9. Deposition process according to either of Claims 7 and 8, characterized in that the first conductive layer (20) is produced from a metallic or organometallic paste.

10. Deposition process according to one of Claims 1 to 9, characterized in that it includes a step consisting in depositing a layer (22) between the first layer (20) and the second layer (30) using a vacuum deposition method, this layer (22) ensuring compatibility between the first and second layers (20, 30).

11. Deposition process according to one of Claims 1 to 10, characterized in that it includes a step consisting in depositing a layer of a catalyst (31), this step preceding that of depositing the second conductive layer (30).

12. Deposition process according to Claim 11, characterized in that the catalyst layer (31) is obtained by dipping in a liquid medium.

13. Deposition process according to one of Claims 1 to 12, characterized in that it includes a step consisting in covering the second conductive layer (30) with a protective layer (32).

14. Deposition process according to Claim 13, characterized in that the protective layer (32) is obtained using an overlaying method by immersion in a liquid medium.

15. Deposition process according to one of Claims 1 to 14, characterized in that the second conductive layer (30) has a thickness of between one and five micrometres approximately.

16. Deposition process according to one of Claims 1 to 15, characterized in that the second conductive layer (30) is based on a metal, such as copper or nickel, or on an alloy.

17. Deposition process according to one of Claims 10 to 16, characterized in that the compatibilizing layer (22) is based on a metal, such as copper, nickel or gold, or on an alloy.

18. Deposition process according to one of Claims 10 to 17, characterized in that the compatibilizing layer (22) has a thickness of between one and a hundred nanometres approximately.

19. Deposition process according to one of Claims 11 to 18, characterized in that the catalyst is based on palladium.

20. Deposition process according to one of Claims 13 to 19, characterized in that the protective layer (32) has a thickness of between fifty and five hundred nanometres approximately.

21. Deposition process according to one of Claims 13 to 20, characterized in that the protective layer (32) is based on a metal such as gold or nickel.

22. Deposition process according to one of Claims 1 to 21, characterized in that the deposition of the second layer (30) is a chemical deposition.

23. Deposition process according to one of Claims 1 to 21, characterized in that the deposition of the second layer (30) is an electrolytic deposition.

24. Deposition process according to one of Claims 1 to 23, characterized in that the glass substrate (10) is intended for the production of flat display screens.
